# EUROPÄISCHE PATENTSCHRIFT

(11) **EP 2 654 481 B1**
(45) Veröffentlichungstag und Bekanntmachung des Hinweises auf die Patenterteilung: **20.05.2015**
(21) Anmeldenummer: 11794411.6
(22) Anmeldetag: 09.12.2011
(51) Int. Cl.: A43B 13/02, A43B 13/14, A43B 13/26, B29D 35/12

(54) **SCHUH, INSBESONDERE SPORTSCHUH**
SHOE, IN PARTICULAR SPORTS SHOE
CHAUSSURE, EN PARTICULIER CHAUSSURE DE SPORT

(30) Priorität: 23.12.2010 DE 102010055818
(43) Veröffentlichungstag der Anmeldung: 30.10.2013
(73) Patentinhaber: PUMA SE, 91074 Herzogenaurach (DE)
(72) Erfinder: HARTMANN, Matthias, 91301 Forchheim (DE)
(74) Vertreter: Gosdin, Michael
(86) Internationale Anmeldenummer: PCT/EP2011/006196
(87) Internationale Veröffentlichungsnummer: WO 2012/084137

(56) Entgegenhaltungen:
- DE-A1- 4 214 802
- GB-A- 2 256 784
- US-A- 5 473 827
- US-A1- 2008 010 863

## Beschreibung

Die Erfindung betrifft einen Schuh, insbesondere einen Sportschuh, mit einer Sohle und einem mit der Sohle verbundenen Schuhoberteil, wobei die Sohle aufweist: mindestens einen der Form der Sohle entsprechenden Grundkörper, wobei der mindestens eine Grundkörper eine Vielzahl von Verstärkungsfasern aufweist, die in eine Kunststoff- oder Kunstharzmatrix eingelagert sind, und eine Anzahl Außensohlenelemente, wobei die Außensohlenelemente stoffschlüssig an dem mindestens einen Grundkörper befestigt sind.

Einen Schuh dieser Art offenbart die GB 2 256 784 A. Ähnliche Lösungen sind in der DE 42 14 802 A1, in der US 5 473 827 A und in der US 2008/010863 A1 beschrieben.

Schuhe dieser üblichen Art müssen für bestimmte Anwendungsfälle besonders leicht sein. Dies gilt insbesondere für einen Sportschuh. Entsprechendes gilt auch vor allem für einen Fußballschuh, an den sowohl hohe Anforderungen an die Festigkeit und Steifigkeit gestellt werden, um die Funktionalität des Schuhs zu gewährleisten, als auch an das Gewicht, das regelmäßig möglichst gering sein sollte.

Daher sind vielfältige Konzepte bekannt geworden, mit denen versucht wird, das Gewicht des Schuhs bei Aufrechterhaltung einer hinreichenden Steifigkeit möglichst zu reduzieren.

Auch der Erfindung liegt die **Aufgabe** zugrunde, einen Schuh, insbesondere einen Sportschuh, der eingangs genannten Art so fortzubilden, dass er zwar einerseits eine hinreichende Steifigkeit aufweist und so die geforderte Funktionalität gewährleistet, dass er andererseits aber auch einen besonders leichten Aufbau hat.

Die **Lösung** dieser Aufgabe durch die Erfindung ist dadurch gekennzeichnet, dass der mindestens eine Grundkörper Ausnehmungen für die Außensohlenelemente aufweist, wobei die Ausnehmungen der Form der Außensohlenelemente entsprechen, wobei die Außensohlenelemente aus Gummimaterial bestehen, wobei der stoffschlüssige Verbund zwischen dem mindestens einen Grundkörper und den Außensohlenelementen durch Vulkanisation hergestellt ist, wobei der Schuh frei von einer Zwischensohle ist und wobei oberhalb des mindestens einen Grundkörpers eine Innensohle eingeklebt ist.

Die Verstärkungsfasern sind bevorzugt Kohlenstofffasern. Sie können in eine Epoxidharzmatrix eingelagert sein.

Die Verstärkungsfasern können dabei zumindest teilweise miteinander verwoben sein.

Eine Fortbildung sieht vor, dass der Grundkörper aus mindestens zwei Teilen gebildet ist, die über eine an beiden Teilen anvulkanisierte Gummischicht miteinander verbunden sind.

Das Verfahren zum Herstellen der Sohle, welches nicht Teil der Erfindung ist, zeichnet sich durch die folgenden Schritte aus:
a) Herstellen mindestens eines der Form der Sohle entsprechenden Grundkörpers, wobei der mindestens eine Grundkörper durch eine Vielzahl von Verstärkungsfasern gebildet wird, die in eine Kunststoff- oder Kunstharzmatrix eingelagert werden;
b) Anordnen einer Anzahl Außensohlenelemente an den mindestens einen Grundkörper;
c) Herstellen einer stoffschlüssigen Verbindung zwischen dem mindestens einen Grundkörper und den Außensohlenelementen durch Durchführen eines Vulkanisiervorgangs.

Gemäß einer nicht beanspruchten Ausführungsform weist das Schuhoberteil auf:
- eine Gewebestruktur, die aus Gewebefäden besteht, wobei die Gewebestruktur als dreidimensionale Struktur ausgebildet ist, die eine Anzahl höher gelegener Punkte und eine Anzahl niedrig gelegener Punkte aufweist, und
- eine Deckschicht,
wobei die Deckschicht zumindest mit einem Teil der höher gelegenen Punkte der Gewebestruktur verbunden ist.

Die Verbindung der Deckschicht ist bevorzugt durch eine Verschweißung, insbesondere durch eine Hochfrequenz- oder Ultraschallverschweißung, des Materials der Gewebestruktur mit dem Material der Deckschicht hergestellt.

Die Gewebestruktur hat vorzugsweise eine Anzahl von hügel- oder höckerartig ausgebildeten Erhebungen, wobei die oberen Bereiche der hügel- oder höckerartigen Erhebungen die höher gelegenen Punkte aufweisen oder bilden. Die hügel- oder höckerartigen Erhebungen können in zwei zueinander senkrechten Richtungen parallel zueinander angeordnet sein. Sie können durch 7 bis 15 parallel zueinander verlaufende Gewebefäden gebildet werden, wobei diese vorzugsweise ineinander verwoben oder verhakt sind.

Die Gewebefäden bestehen bevorzugt aus Polyethylenterephthalat, aus Polyamid oder aus Polyester. Die Deckschicht besteht indes bevorzugt aus einem Thermoplastischen Elastomer (TPE), insbesondere aus Thermoplastischem Elastomer auf Urethanbasis (TPU).

Weiterbildungsgemäß ist eine zweite Deckschicht angeordnet, die mit den niedrig gelegenen Punkten der Gewebestruktur verbunden ist.

Das vorgeschlagene Verfahren zum Herstellen des Materials für das Schuhoberteil zeichnet sich durch die Schritte aus:
a) Bereitstellen einer Gewebestruktur, wobei die Gewebestruktur aus Gewebefäden hergestellt wird und wobei die Gewebestruktur als dreidimensionale Struktur ausgebildet wird, die eine Anzahl höher gelegener Punkte und eine Anzahl niedrig gelegener Punkte aufweist;
b) Anordnen einer Deckschicht auf der Gewebestruktur, so dass zumindest teilweise Kontakt zwischen den höher gelegenen Punkten der Gewebestruktur und der Deckschicht besteht;
c) Verbinden zumindest eines Teils der höher gelegenen Punkte der Gewebestruktur mit der Deckschicht durch einen Schweißvorgang.

Der Schweißvorgang ist bevorzugt ein Hochfrequenzschweißvorgang oder ein Ultraschallschweißvorgang.

Die vorgeschlagene Konzeption stellt bei der Herstellung des Schaftmaterials für das Schuhoberteil also auf eine dreidimensional ausgebildete Gewebestruktur, vorzugsweise mit einer Vielzahl von Höckern, ab. Auf diese Struktur wird eine flächige Bahn (Folie) vorzugsweise aus TPU aufgelegt. Mittels eines wärmeerzeugenden Elements (z. B. Hochfrequenzelektrode oder Ultraschallelektrode) wird die Folie mit den Höckerspitzen verschweißt. Demgemäß wird die Folie punktuell mit der Gewebestruktur verbunden.

Dieser Verbund wird als Schaftmaterial für Sportschuhe, insbesondere für Fußballschuhe, eingesetzt.

Der Vorteil ist eine sehr gute Lüftung des Schuhs, da die dreidimensional ausgebildete Textilstruktur gut luftleitend ist, da sie hierfür eine Kanalstruktur schafft. Das Material nimmt kein Wasser auf. Es ist sehr leicht, somit ist auch der Schuh "superleicht", der aus diesem Schaftmaterial hergestellt ist. Verstärkungsmaterialien im Schaftmaterial sind überflüssig.

Bezüglich der vorgeschlagenen Sohlenstruktur gilt, dass auch diese in besonders vorteilhafter Weise für Fußballschuhe eingesetzt werden kann, da die Sohlengrundplatte - insbesondere als Kohlenstofffaserplatte ausgebildet - eine hohe Steifigkeit hat. Die vorgeformten Gummielemente, die als Außensohle fungieren, haben dadurch, dass sie anvulkanisiert sind, einen festen Verbund mit der Grundplatte.

Die vorgeformten Gummielemente werden bei der Herstellung der Sohle in eine Vulkanisierform eingelegt, ebenso die Grundplatte (Grundkörper). Dann erfolgt der Verbindungsprozess durch Vulkanisieren. Möglich ist es auch, dass mehrere Teile den Grundkörper bilden; diese Teile werden dann ins Werkzeug positioniert eingelegt und mit Gummimaterial verbunden.

Bei der Grundplatte handelt es sich bevorzugt um eine Platte, die verwebte Kohlenstofffasern aufweist, die in einer Kunststoff- oder Kunstharzmatrix eingelagert sind (z. B. in eine aus Epoxidharz).

Bei einem Fußballschuh kann diese so hergestellte Sohle ohne Zwischensohle eingesetzt werden. Es kommt zu einer günstigen Druckverteilung infolge der hohen Steifigkeit der Grundplatte. Die Konstruktion ist sehr leicht. Dies ermöglicht wiederum einen "superleichten" Schuh.

Besonders vorteilhaft ist es, wenn das vorgeschlagene Schaftmaterial des Schuhoberteils und die vorgeschlagene Sohle kombiniert werden. Dann ergibt sich ein besonders leichter Schuh mit hoher Festigkeit.

In der Zeichnung ist ein Ausführungsbeispiel der Erfindung dargestellt. Es zeigen:
- Fig. 1: einen Schuh in der Seitenansicht,
- Fig. 2: eine perspektivische Ansicht einer Gewebestruktur, die Bestandteil des Materials des Schuhoberteils ist,
- Fig. 3: eine Darstellung der Aufbaus der Gewebestruktur gemäß Fig. 2,
- Fig. 4: eine Schnittdarstellung durch das Material des Schuhoberteils gemäß dem Schnitt A-B gemäß Fig. 2,
- Fig. 5: eine schematische Explosionsdarstellung der Sohle des vorgeschlagenen Schuhs, die die Bestandteile der Sohle zeigt, und
- Fig. 6: schematisch die Vergrößerung "Z" gemäß Fig. 5, die den Aufbau einer Grundplatte der Sohle des Schuhs zeigt,
- Fig. 7: die Draufsicht auf die Unterseite einer Sohle gemäß einer alternativen Ausführungsform der Erfindung, wobei hier die Sohle mit einer Anzahl Stollenelemente versehen ist,
- Fig. 8: den Schnitt C-D gemäß Fig. 7 und
- Fig. 9: den Schnitt E-F gemäß Fig. 7.

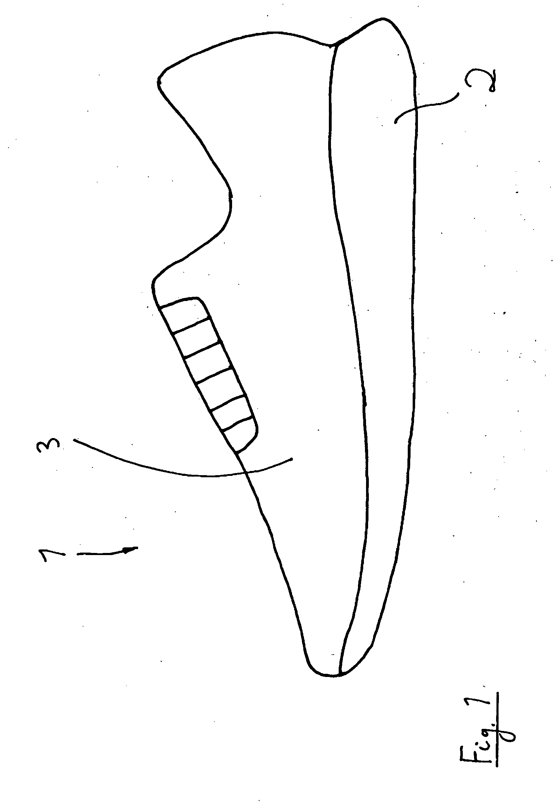

In Fig. 1 ist ein Schuh 1 skizziert, der in bekannter Weise eine Sohle 2 aufweist, an der ein Schuhoberteil 3 angeordnet ist. Für die Verbindung der Sohle 2 mit dem Schuhoberteil 3 gibt es mannigfaltige vorbekannte Möglichkeiten, auf die hier nicht eingegangen werden muss.

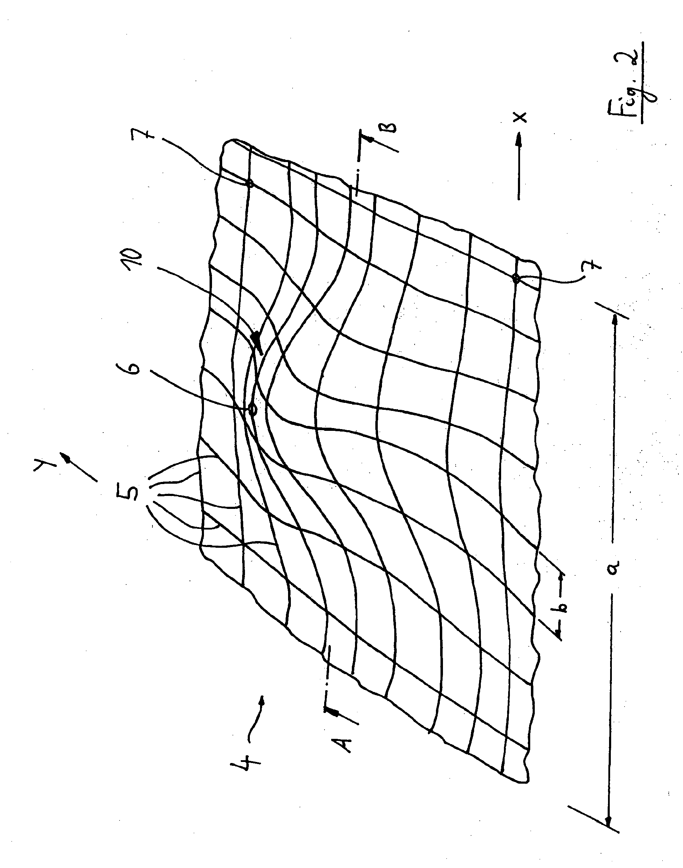

Das Material des Schuhoberteils 3, d. h. das Schaftmaterial, ist in spezieller Weise aufgebaut. Dies geht aus Fig. 2 bis Fig. 4 hervor.

Die Grundstruktur des Schaftmaterials ist eine Gewebestruktur 4, wie sie in Fig. 2 skizziert ist. Hier ist nur ein kleiner Ausschnitt der Gewebestruktur 4 zu sehen, nämlich ein Ausschnitt, der eine einzige hügel- oder höckerartig ausgebildete Erhebung 10 aufweist.

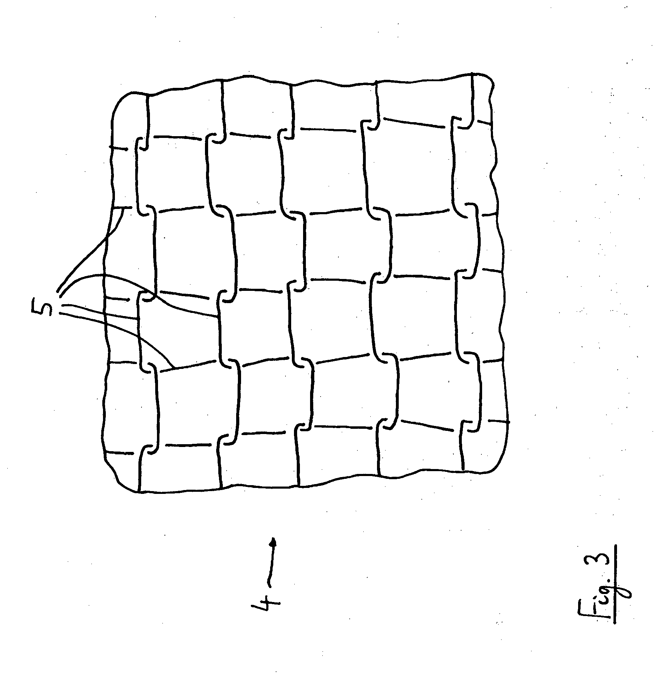

Gebildet wird die dargestellte Gewebestruktur 4 durch Gewebefäden 5, die miteinander verwoben bzw. verhakt sind. In Fig. 3 ist eine bevorzugte Verflechtung der Gewebefäden 5 zu sehen. Man kann sagen, dass die Gewebefäden 5 sich im wesentlichen in zwei zueinander senkrechte Richtungen x und y erstrecken. Dabei bilden die Gewebefäden 5 allerdings keine ebene Struktur, sondern die in Fig. 2 zu sehende dreidimensionale Form.

Wie aus Fig. 3 hervorgeht, sind die Gewebefäden 5 durch einen Webevorgang so miteinander verhakt, dass eine gitterförmige Oberfläche entsteht. Das Gittermaß b (s. Fig. 2) liegt typischerweise im Bereich von 0,5 bis 2 mm.

Von der in Fig. 2 skizzierten Erhebungen 10 ist eine Vielzahl parallel nebeneinander angeordnet, d. h. parallel nebeneinander in x- und in y-Richtung. Die Größe der Struktur ist für den beschriebenen Beispielsfall durch ein Rastermaß a definiert, wobei a typischerweise im Bereich zwischen 5 bis 20 mm liegt, vorzugsweise bei 8 bis 12 mm. Bevorzugt eingesetzt wird ein Gewebefaden, dessen Durchmesser im Bereich zwischen 0,03 bis 0,1 mm liegt.

Durch die dreidimensionale Ausgestaltung der Gewebestruktur 4 ergibt sich, wie in der Zusammenschau der Figuren 2 und 3 gesehen werden kann, pro Erhebung ein höher gelegener Punkt 6 sowie niedrig gelegene Punkte 7. Das Schaftmaterial wird nun dadurch gebildet, dass auf die Oberseite der Gewebstruktur 4 eine Deckschicht 8 aufgelegt wird, die im Ausführungsbeispiel aus einer dünnen, ebenen Schicht besteht.

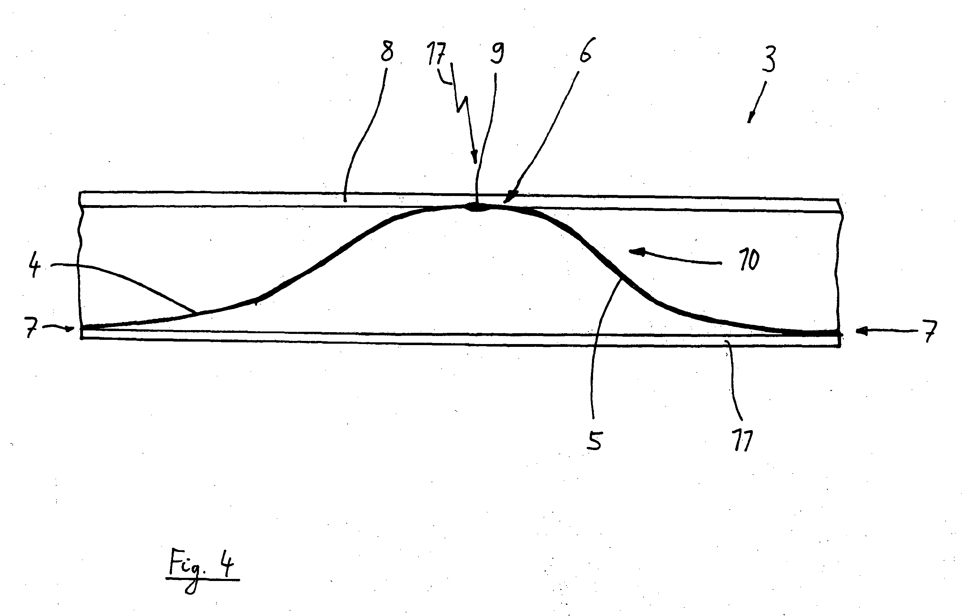

Demgemäß kontaktiert die Deckschicht 8 die Gewebestruktur 4 nur punktuell, d. h. die Deckschicht 8 liegt nur an den höher gelegenen Punkten 6 der Gewebestruktur 4 an. Schematisch ist in Fig. 4 angedeutet, dass nunmehr, nachdem die Deckschicht 8 platziert ist, ein Schweißenergieeintrag 17 erfolgt, z. B. durch ein Ultraschallschweißgerät oder durch ein Hochfrequenzschweißgerät, so dass es zu einem Verschmelzen des Materials der Gewebestruktur 4 und des Materials der Deckschicht 8 kommt. Dies ist in Fig. 4 durch die Verbindung 9 in Form eines Schweißpunktes angedeutet.

In analoger Weise kann auf der Unterseite der Gewebestruktur vorgegangen werden. Hier kann - wie in Fig. 4 zu sehen - eine zweite Deckschicht 11 angelegt werden, die in gleicher Weise über Schweißpunkte befestigt werden kann.

Hierdurch ergibt sich eine sehr stabile und dennoch sehr leichte Materialstruktur zur Verwendung als Schaftmaterial für das Schuhoberteil.

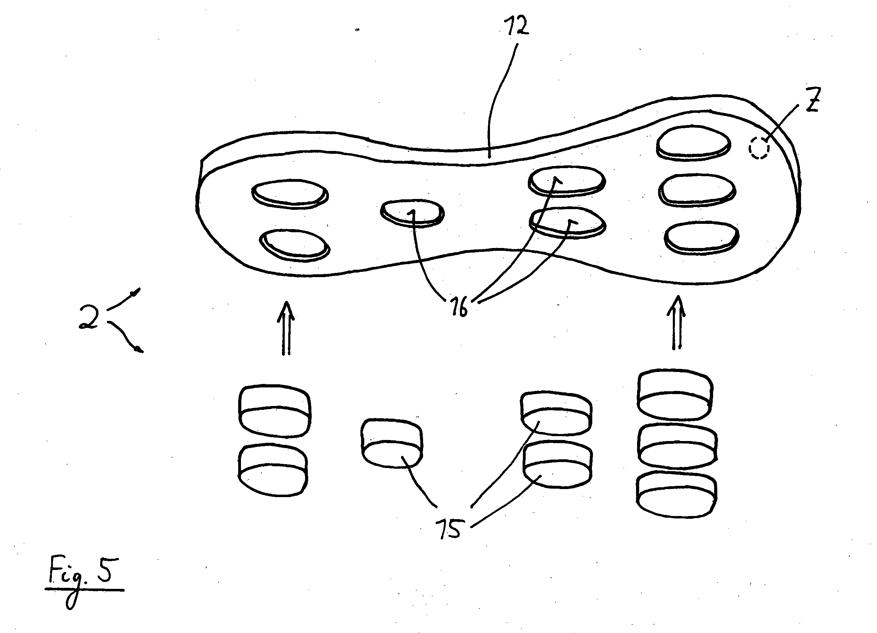

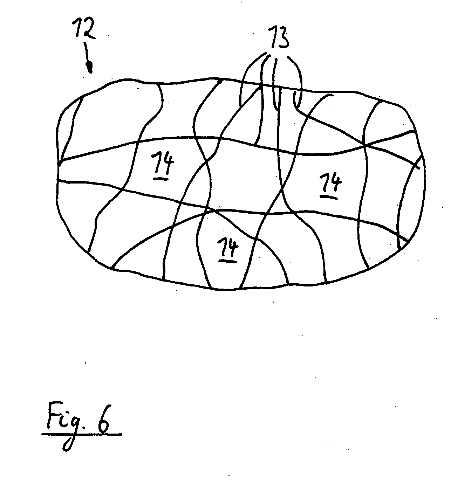

In Fig. 5 ist zu sehen, wie die vorgeschlagene zugehörige Sohle 2 des Schuhs 1 konzipiert ist. Die Sohle 2 besteht aus einem Grundkörper 12, dessen Aufbau schematisch aus Fig. 6 hervorgeht. Demgemäß sind Verstärkungsfasern 13, insbesondere Kohlenstofffasern, miteinander verwoben in eine Kunststoffmatrix oder Kunstharzmatrix 14 eingelagert, die bevorzugt aus Epoxidharz besteht. Es ergibt sich daher eine sehr feste und elastische Struktur für den Grundkörper 12.

Bereits bei der Formung des Grundkörpers 12, gegebenenfalls aber auch erst später durch mechanische Bearbeitung, werden Ausnehmungen 16 in die Grundplatte 12 eingebracht, von der man in Fig. 5 die Unterseite sieht. Die Form der Ausnehmungen 16 entspricht der Form von Außensohlenelementen 15 aus Gummimaterial, die in ihrer Gesamtheit die Außensohle des Schuhs 1 bilden.

Die Außensohlenelemente 15 werden nach der Herstellung des Grundkörpers 12 in die Ausnehmungen 16 eingeschoben; die Tiefe der Ausnehmungen 16 ist dabei kleiner als die Höhe der Außensohlenelemente 15, so dass die Außensohlenelemente 15 nach dem Einsetzen in die Ausnehmungen 16 nach unten überstehen und so ihre Funktion als Außensohle wahrnehmen können.

Ein fester Verbund zwischen dem Grundkörper 12 und den Außensohlenelementen 15 wird durch einen Vulkanisiervorgang erreicht, der nach der Platzierung der Außensohlenelemente 15 im Grundkörper 12 in einer entsprechenden Vulkanisierform ausgeführt wird.

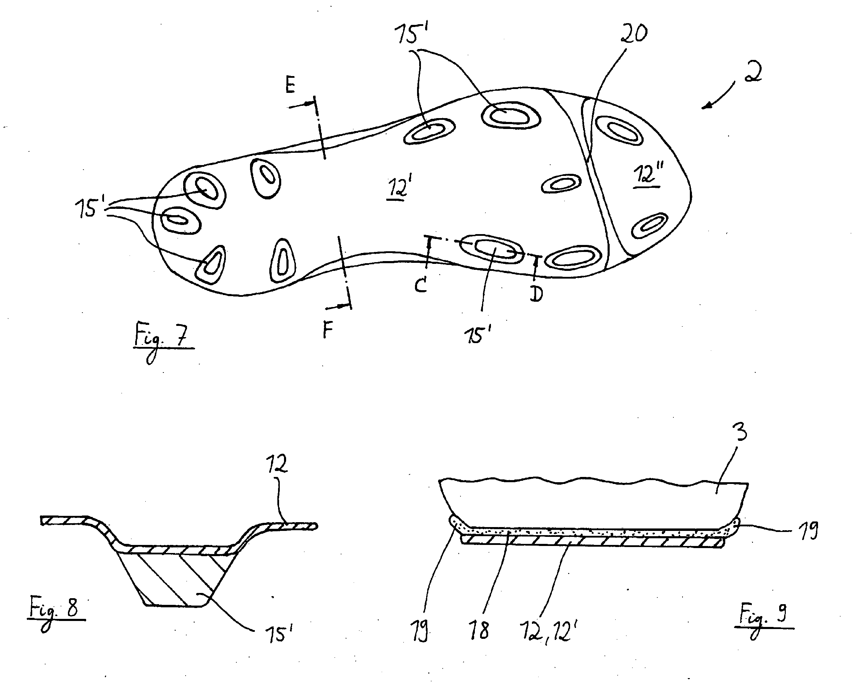

In den Figuren 7 bis 9 ist eine alternative Ausführungsform einer Sohle 2 gemäß der Erfindung zu sehen.

Grundsätzlich gilt auch hier, dass die Sohle aus einem Grundkörper 12 besteht, an dem Außensohlenelemente 15 befestigt sind. Die Außensohlenelemente 15 sind hier allerdings als Stollen 15' ausgebildet, die am Grundkörper 12 befestigt sind. Die Schnittdarstellung gemäß Fig. 8 (Schnitt C-D gemäß Fig. 7) zeigt, dass - wie vorstehend bereits ausgeführt - das Material des Außensohlenelements in Form des Stollens 15' direkt am Grundkörper 12 der Sohle angespritzt bzw. anvulkanisiert ist. Wie Fig. 8 entnommen werden kann, ist der Grundkörper 12 im Bereich der Aufnahme des Stollens 15' entsprechend der Form des Negativs etwas aus der ebenen Form umgeformt worden, so dass die Form des Grundkörpers 12 entsteht, wie es Fig. 8 zeigt. An die ausgeformte Erhebung ist das Material des Stollens 15' angespritzt bzw. anvulkanisiert. Eine mechanische Verbindung zwischen Grundkörper 12 und Stollen 15' ist nicht vorhanden. Insbesondere weist der Grundkörper 12 im Bereich der Aufnahme des Stollens 15' keine Ausnehmung auf. Demgemäß liegt eine durchgängige Schicht des faserverstärkten Materials des Grundkörpers 12 vor.

Eine andere spezifische Ausgestaltung des Ausführungsbeispiels gemäß Fig. 7 ist, dass hier der Grundkörper 12 nicht als eine durchgängige Platte ausgebildet ist, sondern aus zwei Teilen 12' und 12" besteht. Die beiden Teile 12', 12" können bei der Fertigung in ein Werkzeug positioniert eingelegt werden; dann wird Gummimaterial so darübergelegt, dass die Teile 12', 12" des Grundkörpers über das Gummimaterial verbunden werden. In Fig. 7 ist ein Gummisteg 20 zu sehen, über den die Teile 12' und 12" miteinander elastisch verbunden sind. So kann an dieser Stelle eine flexible, gelenkartige Verbindung zwischen den Teilen 12', 12" hergestellt werden, die als Flexzone bzw. Flexrille zwischen den Teilen 12', 12" dient. Das Gummimaterial dient im Bereich des Gummistegs 20 also als funktionelles Element, das die Struktur des Grundkörpers 12 unterbricht und die faserverstärkten Platten relativ zueinander in definierter Weise flexibel macht.

Dem Schnitt E-F gemäß Fig. 9 ist zu entnehmen, dass das Gummimaterial als Gummischicht die Teile 12', 12" einseitig kontaktiert. Im Randbereich kann das Gummimaterial als umlaufender Rand 19 (umlaufende Gummilippe) ausgeführt sein.

Eine alternative Produktionsweise stellt darauf ab, dass das Material des Grundkörpers 12 in noch nicht endgültig fertig ausgehärtetem Zustand in ein Werkzeug eingebracht wird, um das Material des Außensohlenelements anzuspritzen, sondern dass das Material des Grundkörpers 12 (insbesondere das Kohlefasermaterial) in das Werkzeug eingebracht wird, genauso wie vorgefertigte Außensohlenelemente bzw. Stollen 15, 15'.

Im Rahmen eines Vulkanisierungsprozesses wird dann sowohl das Material des Grundkörpers 12 in seinen endgültigen gebrauchsfertigen Zustand verbracht, gleichzeitig wird das Gummimaterial mit dem Material des Grundkörpers 12 verbunden.

### Bezugszeichenliste:

- 1: Schuh
- 2: Sohle
- 3: Schuhoberteil
- 4: Gewebestruktur
- 5: Gewebefaden
- 6: höher gelegener Punkt
- 7: niedrig gelegener Punkt
- 8: Deckschicht
- 9: Verbindung (Verschweißung)
- 10: hügel- oder höckerartig ausgebildete Erhebungen
- 11: zweite Deckschicht
- 12: Grundkörper
- 12': erster Teil des Grundkörpers
- 12": zweiter Teil der Grundkörpers
- 13: Verstärkungsfaser
- 14: Kunststoffmatrix / Kunstharzmatrix
- 15: Außensohlenelement
- 15': Stollen
- 16: Ausnehmung
- 17: Schweißenergieeintrag
- 18: Gummischicht
- 19: umlaufender Rand
- 20: Gummisteg
- x: Richtung
- y: Richtung
- a: Rastermaß
- b: Gittermaß

## Patentansprüche

1. Schuh (1), insbesondere Sportschuh, mit einer Sohle (2) und einem mit der Sohle (2) verbundenen Schuhoberteil (3), wobei die Sohle (2) aufweist:
- mindestens einen der Form der Sohle (2) entsprechenden Grundkörper (12, 12', 12"), wobei der mindestens eine Grundkörper (12, 12', 12") eine Vielzahl von Verstärkungsfasern (13) aufweist, die in eine Kunststoff- oder Kunstharzmatrix (14) eingelagert sind, und
- eine Anzahl Außensohlenelemente (15, 15'), wobei die Außensohlenelemente (15, 15') stoffschlüssig an dem mindestens einen Grundkörper (12, 12', 12") befestigt sind,
**dadurch gekennzeichnet, dass**
der mindestens eine Grundkörper (12, 12', 12") Ausnehmungen (16) für die Außensohlenelemente (15) aufweist, wobei die Ausnehmungen (16) der Form der Außensohlenelemente (15) entsprechen,
wobei die Außensohlenelemente (15, 15') aus Gummimaterial bestehen, wobei der stoffschlüssige Verbund zwischen dem mindestens einen Grundkörper (12, 12', 12") und den Außensohlenelementen (15, 15') durch Vulkanisation hergestellt ist,
wobei der Schuh frei von einer Zwischensohle ist und
wobei oberhalb des mindestens einen Grundkörpers (12, 12', 12") eine Innensohle eingeklebt ist.

2. Schuh nach Anspruch 1, **dadurch gekennzeichnet, dass** die Verstärkungsfasern (13) Kohlenstöfffasern sind, wobei die Verstärkungsfasern (13) vorzugsweise in eine Epoxidharzmatrix eingelagert sind.

3. Schuh nach Anspruch 1 oder 2, **dadurch gekennzeichnet, dass** die Verstärkungsfasern (13) zumindest teilweise miteinander verwoben sind.

4. Schuh nach einem der Ansprüche 1 bis 3, **dadurch gekennzeichnet, dass** der Grundkörper (12) aus mindestens zwei Teilen (12', 12") gebildet ist, die über eine an beiden Teilen (12', 12") anvulkanisierte Gummischicht miteinander verbunden sind.

## Claims

1. Shoe (1), especially sport shoe, with a sole (2) and a shoe upper (3) which is connected with the sole (2), wherein the sole (2) comprises:
- at least one base body (12, 12', 12") in accordance with form of the sole (2), wherein the at least one base body (12, 12', 12") comprises a plurality of reinforcement fibers (13), which are integrated into a plastic or resin matrix (14) and
- a plurality of outer sole elements (15, 15'), wherein the outer sole elements (15, 15') are fixed material-bonded at the at least one base body (12, 12', 12"),
**characterized in that**
the at least one base body (12, 12', 12") comprises recesses (16) for the outer sole elements (15), wherein the recesses (16) correspond to the form of the outer sole elements (15),
wherein the outer sole elements (15, 15') consist of rubber material,
wherein the material-bonded connection between the at least one base body (12, 12', 12") and the outer sole elements (15, 15') is established by vulcanization,
wherein the shoe is free of a midsole and
wherein above the at least one base body (12, 12', 12") an inner sole is glued in.

2. Shoe according to claim 1, **characterized in that** the reinforcement fibers (13) are carbon fibers, wherein the reinforcement fibers (13) are preferably embedded into an epoxy resin matrix.

3. Shoe according to claim 1 or 2, **characterized in that** the reinforcement fibers (13) are at least partly interwoven with each other.

4. Shoe according to one of claims 1 to 3, **characterized in that** the base body (12) consists of at least two parts (12', 12"), which are connected with another by a rubber layer which is vulcanized at both parts (12', 12").

## Revendications

1. Chaussure (1), en particulier chaussure de sport, comprenant une semelle (2) et une partie supérieure de chaussure (3) connectée à la semelle (2), la semelle (2) présentant :
- au moins un corps de base (12, 12', 12") correspondant à la forme de la semelle (2), l'au moins un corps de base (12, 12', 12") présentant une pluralité de fibres de renforcement (13) qui sont incorporées dans une matrice en plastique ou en résine synthétique (14), et
- une pluralité d'éléments de semelle extérieure (15, 15'), les éléments de semelle extérieure (15, 15') étant fixés par liaison de matière à l'au moins un corps de base (12, 12', 12"),
**caractérisée en ce que**
l'au moins un corps de base (12, 12', 12") présente des évidements (16) pour les éléments de semelle extérieure (15), les évidements (16) correspondant à la forme des éléments de semelle extérieure (15),
les éléments de semelle extérieure (15, 15') se composant de matériau en caoutchouc,
l'assemblage par liaison de matière entre l'au moins un corps de base (12, 12', 12") et les éléments de semelle extérieure (15, 15') étant réalisé par vulcanisation,
la chaussure étant exempte d'une semelle intermédiaire et
au-dessus de l'au moins un corps de base (12, 12', 12") étant collée une semelle intérieure.

2. Chaussure selon la revendication 1, **caractérisée en ce que** les fibres de renforcement (13) sont des fibres de carbone, les fibres de renforcement (13) étant incorporées de préférence dans une matrice de résine époxyde.

3. Chaussure selon la revendication 1 ou 2, **caractérisée en ce que** les fibres de renforcement (13) sont au moins en partie tissées les unes avec les autres.

4. Chaussure selon l'une quelconque des revendications 1 à 3, **caractérisée en ce que** le corps de base (12) est formé d'au moins deux parties (12', 12"), qui sont connectées les unes aux autres par le biais d'une couche de caoutchouc vulcanisée sur les deux parties (12', 12").
